(19) **Europäisches Patentamt**
**European Patent Office**
**Office européen des brevets**

(11) **EP 1 264 916 A1**

(12) **EUROPEAN PATENT APPLICATION**
published in accordance with Art. 158(3) EPC

(43) Date of publication:
**11.12.2002 Bulletin 2002/50**

(51) Int Cl.⁷: **C23F 13/00**, C23F 15/00

(21) Application number: **01908160.3**

(86) International application number:
**PCT/JP01/01523**

(22) Date of filing: **28.02.2001**

(87) International publication number:
**WO 01/064973 (07.09.2001 Gazette 2001/36)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **29.02.2000 JP 2000053979**
**29.02.2000 JP 2000054252**

(71) Applicant: **Asahi Kasei Kabushiki Kaisha**
**Osaka-shi, Osaka 530-8205 (JP)**

(72) Inventors:
• **NAKAHARA, Masao**
**Funabashi-shi, Chiba 274-0825 (JP)**
• **NAKATANI, Masayuki**
**Nobeoka-shi, Miyazaki 882-0051 (JP)**
• **TAKAHASHI, Jun'ichi, Asahi Kasei Okubo-ryo**
**Yokohama-shi, Kanagawa 233-0007 (JP)**

(74) Representative: **Prins, Adrianus Willem et al**
**Vereenigde,**
**Nieuwe Parklaan 97**
**2587 BN Den Haag (NL)**

(54) **CORROSION RESTRAINING METHOD AND CORROSION-RESISTING DEVICE**

(57)     A method of suppressing corrosion of stainless steels or carbon steels exposed to environments of sulfuric acid or sulfuric acid-containing solution, wherein the stainless steel or carbon steel, and a metal selected from the group consisting of platinum, gold, silver and palladium, or an alloy thereof are brought into contact.

**FIG.1**

EP 1 264 916 A1

**Description**

Technical Field

This invention concerns a method of suppressing corrosion of stainless steels or carbon steels exposed to environments of sulfuric acid or sulfuric acid-containing solution, an apparatus having corrosion resistance and a method of producing heat resistant forming products using the apparatus.

Background Art

Sulfuric acid has generally been used in the field of chemical industries such as for fibers, fertilizers and chemicals. Since sulfuric acid has a corrosive effect, materials having corrosion resistance have to be selected for handling sulfuric acid at high concentration. While various corrosion resistant materials have been known, stainless steels have been used in many cases and, particularly, as materials of apparatus used in the field of the chemical industry.

Examples of such apparatus can include, filtration apparatus incorporated with stainless steel filters. The stainless steel filters have been used generally in view of the corrosion resistance thereof. In a case of filtration for fluids at low viscosity, since the pressure loss in filters is low, filters comprising various corrosion resistant materials such as Teflon can be used. However, in a case of filtration for fluids at high viscosity, particularly, for filtration at high accuracy of 10 μm or less, stainless steels have to be used inevitably in actual situations for the corrosion resistant material. Particularly, for filtration at a high accuracy of 5 μm or less, type 316L stainless steel is an industrially available material.

An example for filtration of fluids at high viscosity includes filtration for film materials in production steps for heat resistant films such as aramid films or polyimide films. When a heat resistant film is used as a base film for a magnetic recording medium, the surface of the film has to be smooth. Therefore, various methods of controlling the surface smoothness of the film by filtration of film materials using filters have been reported. Reference can be made, for example, to Japanese Patent Application Laid-Open No. 8-147664 (1996), WO96/06128, WO97/39876, WO99/08853, Japanese Patent Application Laid-Open No. 9-194607 (1997), Japanese Patent Application Laid-Open No. 10-139895 (1998) and Japanese Patent Application Laid-Open No. 9-169859 (1997). In the filtration of the film material, particularly, filtration at a high accuracy of 10 μm or less for the film materials described therein, the filter material is restricted to industrially available stainless steels. Among them, sintered non-woven fabric filters made of type 316L stainless steel have been used.

Generally, in a case where the corrosive effect of a fluid passing through the filter in the filtration apparatus is strong, it results in corrosion of the filter material to bring about a problem that corrosion products are intruded in the solution after filtration. Boshoku Gijyutsu, Japanese Corrosion Journal, vol. 36, 578 - 585 (1987) describes that corrosion is caused to stainless steels even with sulfuric acid at high concentration. Further, it has been confirmed that intermittent corrosion behavior of stainless steels is caused also in a case of filtration of a solution having a strong corrosive effect by the use of an existent stainless steel filter, and stable filtration capable of obtaining a solution of an excellent quality can not be practiced. Therefore, when such corrosive behavior is caused in the production step of the heat resistant films described above, it gives an effect on the factor of the film quality. As a result, since this results in deterioration of the quality such as lowering of the surface smoothness or occurrence of pinholes in the films, it has been considered difficult to obtain a film of high quality from the starting material for the heat resistant film containing a solution having an intense corrosive effect.

As has been described above, even in a case of using a corrosion resistant stainless steel, corrosion occurs depending on the circumstantial condition such as concentration and temperature of sulfuric acid and the corrosion products possibly degrade the quality of final products. Therefore, it has been demanded for a technique capable of further improving the corrosion resistance of stainless steels which are useful as the material for the apparatus.

For improving the corrosion resistance of stainless steels, attempts have been made such as (i) use of special stainless steel alloys containing chromium, nickel, molybdenum at high concentration, or (ii) application of an anodic protection method by an external power source method. However, the method (i) described above uses special corrosion resistant materials such as stainless steels with addition of chromium, nickel and molybdenum at high concentration (for example, 20 alloy), or nickel-based alloy containing molybdenum (for example, B alloy). Such special corrosion resistant materials are extremely expensive compared with general-purpose stainless steels such as type 304. Accordingly, for suppressing the corrosion, when the apparatus is manufactured by using a special corrosion resistant material, the cost of the apparatus itself is increased since the material is expensive, as well as the time for delivery of the apparatus often brings about a problem since the corrosion resistant material is difficult to be obtained. Further, it requires an extremely special working technique, which is not practical. Further, depending on the characteristics of the corrosion resistant materials, fabrication can not sometimes be conducted. Particularly, as in the case of the non-woven fabric filter described previously, there are those materials that are manufactured industrially only by type 316L stainless steel. The method (ii) above requires various considerations on the arrangement of electrodes or the current control upon application of the anodic protection method. Further, not only a control device is necessary for controlling the electrode and the current but also the control device has to be maintained so as to attain corrosion inhibition favorably during operation. With the reasons described above, application of the anodic protection method is restricted to specified apparatus such as heat exchangers, reactors or pipelines. In view of the above, there has yet been present a demand for the technique capable of effectively suppressing the corrosion and being applicable generally. Particularly, it has been demanded for a simple and convenient corrosion preventive method of suppressing corrosion in general-purpose stainless steels such as type 304 or type 316.

Japanese Patent Application Laid-Open No. 53-5043 (1978) (US Patent No. 4145393) and Japanese Patent Application Laid-Open No. 60-238492 (1985) disclose simple and convenient corrosion preventive methods. Japanese Patent Application Laid-Open No. 53-5043 (1978) concerns a corrosion preventive method in a case of using a vessel made of gray cast iron in the environment of boiling sulfuric acid wastes (70% - 90% concentration), in which corrosion is suppressed by bringing a noble metal into contact with a vessel made of cast iron or by the incorporation or by existence of ions of noble metals in sulfuric acid wastes. Japanese Patent Application Laid-Open No. 60-238492 (1985) concerns a corrosion preventive method of titanium or titanium alloys in the environment of high temperature nitric acid, in which corrosion is suppressed by bringing zirconium or zirconium alloy into contact with titanium or titanium alloy. However, none of the corrosion preventive methods described above is directed to stainless steels.

Disclosure of the Invention

A subject of this invention is to provide a simple and convenient method of suppressing corrosion of stainless steels exposed to sulfuric acid environments.

Further, another subject of this invention is to provide a corrosion resistant apparatus that can be used with no remarkable corrosion in sulfuric acid environments.

A further subject of this invention is to provide a process for stably producing forming products of high quality from heat resistant resin ingredients containing sulfuric acid at high concentration.

For solving the subject described above, the present inventors have made an earnest study on the corrosion phenomenon of stainless steels exposed to the environment of sulfuric acid or sulfuric acid-containing solution and, as a result, have found that corrosion of the stainless steels can be suppressed by bringing a noble metal such as platinum, gold or silver into contact with a portion of the stainless steels. Further, in the course of various studies, it has been found that such a corrosion suppressing method is effective also for carbon steels.

While the corrosion preventive mechanism in this invention is not restricted by any theory, the present inventors consider as below. In the environment of sulfuric acid or sulfuric acid-containing solution, carbon steel or stainless steel is in an active state or in an instable state of taking an active state and a passive state alternately with lapse of time, depending on the concentration and the temperature of sulfuric acid, which leads to general corrosion. When the carbon steel or the stainless steel is in the active state being immersed spontaneously in the environment of sulfuric acid or sulfuric acid-containing solution, it is put to the general corrosion state. On the contrary, at a potential higher than that in the natural immersion state, it provides a passive state to possibly suppress the corrosion. Taking the advantage of this phenomenon, anodic protection by an existent external power source method is applied.

In the course of the study on the corrosion behavior, the present inventors have obtained the following knowledge. The cathode polarization characteristics of noble metals such as platinum, gold, silver and alloys thereof, in the environment of sulfuric acid or sulfuric acid-containing solution are remarkably active and the over-voltage for each of them is lower when compared with the cathode polarization characteristics of carbon steels and stainless steels. Further, while depending on the circumstantial conditions, the cathode characteristics of noble metals in a potential region in which the stainless steel is in the active state sometimes show a current density higher by about $10^4$ times at the greatest compared with the current density in the active dissolution of the stainless steels. Further, the noble metals described above are excellent in the corrosion resistance and the general corrosion rate is extremely low in the environment described above.

In view of the result of the study described above and the feature of the dissolution behavior of the carbon steel or stainless steel, when a noble metal with a predetermined area ratio or more is in contact with the carbon steel or the stainless steel, it is possible to keep the potential thereof at a potential higher than that where each of them is individually immersed naturally. As a result, it is considered that the potential for the carbon steel or the stainless steel can be converted to a potential range from an active state of causing the general surface corrosion to a passive state of suppressing the corrosion. The present inventors have accomplished this invention based on such concept.

That is, the corrosion suppressing method according to this invention is a corrosion suppression method for stainless steels or carbon steels exposed to environments of sulfuric acid or sulfuric acid-containing solution in which stainless steels or carbon steels are in contact with a noble metal. In the corrosion suppressing method, the surface area ratio of the noble metal relative to the stainless steels or carbon steels is preferably 1/10,000 or more. Further, in the corrosion suppressing method, the sulfuric acid concentration of the sulfuric acid-containing solution is preferably 70% by weight or more. Further, the noble metal is preferably a metal or an alloy selected from the group consisting of platinum, gold, silver and palladium, or alloys thereof.

An apparatus according to this invention is an apparatus made of stainless steels or carbon steels exposed to the environments of sulfuric acid or sulfuric acid-containing solution, in which a noble metal is in contact with at least a portion in the apparatus made of stainless steels or carbon steels. In the apparatus constituted as described above, the noble metal is preferably a metal or an alloy selected from the group consisting of platinum, gold, silver and palladium, or alloys thereof. The apparatus according to this invention preferably includes apparatus or apparatus elements selected at least by one from the group consisting of reactors, columns, vessels, pipelines, heat exchangers, filtration apparatus, pumps, valves and measuring instrument equipments. Further, the apparatus according to this invention preferably has at least a filtration apparatus having a filter in which the ratio of the surface area of the noble metal relative to the filtration area is 1/1000 to 1000/1.

A production method for heat resistant forming products according to this invention is a method of producing heat resistant forming products from a resin solution containing sulfuric acid, in which the resin solution containing sulfuric acid is filtrated by using the apparatus at least having the filtration apparatus described above, and the resultant filtrates are formed into forming products. The forming products are preferably fibers or films. Further, the resin solution containing sulfuric acid preferably contains polyamide or polyimide.

Brief Explanation of Drawings

Fig. 1 is a schematic cross sectional view illustrating a filtration apparatus using leaf disk filters as an embodiment according to this invention.
Fig 2 is a schematic cross sectional view illustrating a filtration apparatus using a candle type filter as an embodiment according to this invention.
Fig 3 is a schematic cross sectional view illustrating a filtration apparatus using a plurality of cylindrical filters as an embodiment according to this invention.
Fig. 4 is a graph showing the result of Example 3.

Best Mode for Practicing the Invention

Details of the invention of the present application are to be described specifically.

A first embodiment of this invention concerns a corrosion suppressing method. The corrosion suppressing method according to this invention is a method of suppressing corrosion of stainless steel or carbon steel exposed to the environment of sulfuric acid or sulfuric acid-containing solution in which the stainless steel or carbon steel is brought into contact with a noble metal.

For attaining corrosion suppression in the corrosion suppressing method described above, the stainless steel or carbon steel has to be in electric connection with the noble metal. For electrically connecting both of them, it is necessary to bring the stainless steel or carbon steel into contact electrically with the noble metal. As the method of contact, the stainless steel or the carbon steel and the noble metal may be in direct contact or may be in contact by way of a conductive member with each other. For example, a bare material of a noble metal can be in direct contact or in contact by way of a conductive member with the surface of the stainless steel or carbon steel. Further, they may be in contact with each other by providing a membrane of the noble metal to a portion of the stainless steel or carbon steel. Further, a member coated with a membrane of the noble metal may be in direct contact or in contact by way of a conductive member with the surface of the stainless steel or carbon steel.

There is no particular restriction on the conductive member, and gaskets, packings, seals or bolts made of stainless steel are used suitably. Further, deposition of the noble metal membrane can be attained by using a customary method such as plating, cladding, vapor deposition, flame spray, sputtering or ion plating. While several examples are shown for the method of contact with the stainless steel or carbon steel, the contact method is not restricted only to them but they may be properly modified within a range where the stainless steel or carbon steel and the noble metal are in conduction with each other.

The corrosion suppressing method according to this invention can be attained also by adding a salt of a noble metal which is dissociated in sulfuric acid or sulfuric acid-containing solution and present as ions of the noble metal to sulfuric acid or sulfuric acid-containing solution. The corrosion-prevention mechanism may be considered as below. The carbon steel or stainless steel put under the sulfuric acid environment suffers from general corrosion at the initial stage. However, when the noble metal present as ions in the solution is in contact with the surface of the carbon steel or the stainless steel, the noble metal is precipitated to cover a portion of the carbon steel or stainless steel. This results in the same effect as in a case where the noble metal is in direct contact with the stainless steel or carbon steel in which the potential of the metal shifts from the active state potential region to the passive state potential region to suppress corrosion.

The noble metal to be in contact with the stainless steel or carbon steel includes Ru (ruthenium), Rh (rhodium), Pd (palladium), and Ag (silver) having atomic numbers of 44 to 47, and Os (osmium), Ir (iridium), Pt (platinum) and Au (gold) having atomic numbers of 76 to 79. The noble metal may be used individually or may be used as an alloy in combination of two or more of the metals.

The noble metal in the corrosion suppressing method is selected properly in accordance with the corrosion characteristics of the environment to which the stainless steel or carbon steel is exposed. In the sulfuric acid system environment, Pt, Au, Ag, Pd, or alloys thereof particularly excellent in corrosion resistance are preferred. As the alloy, those having Pt, Au, Ag or Pd contents of 50% or more in total are particularly preferred. In most preferred embodiments according to this invention, Pt or Au is used.

Further, in a case of precipitating a noble metal in a state where noble metal ions are present in the solution, various noble metal-containing salts can be used. Those noble metal salts containing Pt, Au, Ag or Pd are preferred and containment of Pt or Au is particularly preferred.

The concentration of sulfuric acid in the sulfuric acid-containing solution for the corrosion suppressing method described above is preferably 70 wt% or more and, more preferably, 85 wt% or more in view of corrosion suppression. Further, the temperature applied to sulfuric acid or sulfuric acid-containing solution in the corrosion suppressing method is, preferably, $50°C$ or lower for the carbon steel and, preferably, $100°C$ or lower for the stainless steel with the practical point of view. Further, while the area ratio between the carbon steel or stainless steel, and the noble metal depends on the concentration and the temperature of sulfuric acid and the kind of the metal material, a preferred surface area ratio of the noble metal to the carbon steel or stainless steel is 1/10,000 or more and, more preferably, 1/500 or more.

As has been described above, in the corrosion suppressing method according to this invention, a noble metal is brought into contact with the carbon steel or stainless steel exposed in the environment of sulfuric acid or sulfuric acid-containing solution at high concentration having a strong corrosiveness to electrically connect them, thereby capable of suppressing the corrosion of the carbon steel or stainless steel easily and effectively.

The second embodiment of this invention concerns a corrosion resistant apparatus. The apparatus according to this invention is an apparatus made of stainless steels or carbon steels exposed to environments of sulfuric acid or sulfuric acid-containing solution, in which at least a portion in the apparatus made of the stainless steels or carbon steels is in contact with a member made of a noble metal.

The term "apparatus" used in the present specification means various apparatus and apparatus elements made of carbon steels or stainless steels used in the environments of sulfuric acid and sulfuric acid containing solution. It preferably includes apparatus and apparatus elements selected by at least one from the group consisting of reactors, columns, vessels, pipelines, heat exchangers, filters, pumps, valves and measuring instrument equipments. Since the filter has a large surface area, it suffers from a significant effect of corrosion with sulfuric acid. Therefore, a remarkable effect can be attained by the application of this invention to an apparatus at least having the filter.

For attaining the corrosion suppression favorably in the apparatus according to this invention, the stainless steel or the carbon steel constituting the apparatus, and the noble metal have to be electrically conducted. For electrically conducting both of them, the apparatus made of the stainless steel or the carbon steel and the noble metal have to be in direct contact or in contact by way of a conductive member with each other. For example, a bare material of the noble metal can be in direct contact or in contact by way of a conductive member with the surface inside the apparatus. Further, they may be brought into contact with each other by the provision of a noble metal membrane to a portion on the surface inside the apparatus made of the stainless steel or carbon steel. Further, a member covered with a membrane of a noble metal may be in direct contact or in contact by way of a conductive member with the surface inside the apparatus made of the stainless steel or the carbon steel.

There is no particular restriction on the material for the connective member which can include, for example, a metal material, stainless steel being preferred. As the conductive member, gaskets, packings, seals or bolts made of stainless steel are used suitably. Further, the deposition of the noble metal membrane can be attained by using a well-known method such as plating, cladding, vapor deposition, flame spray, sputtering or ion plating. There is no particular restriction on the thickness of the membrane comprising the noble metal and it is practically from 0.01 $\mu m$ to 10 mm. When the film thickness is 0.01 $\mu m$ or less, it is possibly peeled during use. Further, when the thickness is 10 mm or more, it can not be used practically since the cost is very much expensive. While several methods of contact have been illustrated as described above, the contact method is not restricted only to them and can be modified properly within a range where the stainless steel or the carbon steel, and the noble metal are in electric conduction with each other.

The noble metal to be in contact with the surface inside the apparatus made of the stainless steel or carbon steel includes Ru, Rh, Pd and Ag having atomic numbers of 44 to 47, as well as Os, Ir, Pt and Au having atomic numbers of 76 to 79. Such noble metal can be used either individually or as an alloy in combination of two or more of the metals.

The noble metal applied to the apparatus according to this invention is properly selected in accordance with the corrosion characteristics of the environment to which the apparatus made of stainless steel or carbon steel is exposed. In the sulfuric acid system environment, Pt, Au, Ag, Pd or alloys thereof of particularly excellent corrosion resistance are preferred. As the alloys, those having Pt, Au, Ag or Pd content of 50% or more in total are particularly preferred. In most preferred embodiments in this invention, Pt or Au is used.

The apparatus constituted as described above can be used favorably with no corrosion even when exposed to the environment of a solution containing sulfuric acid as the main ingredient. The solution comprising sulfuric acid as the main ingredient means a solution with a sulfuric acid content of 50 wt% or more and the solution may contain resin ingredients. Further, it may be sulfuric acid itself. The resin ingredients can include a resin disclosed, for example, in Japanese Patent Application Laid-Open No. 11-222529 (1999), with no particular restriction. The sulfuric acid concentration calculated from the sulfuric acid ingredient and the water content in the solution is 70 wt% or more and, particularly, 85 wt% or more in view of the corrosion.

The apparatus according to this invention is to be described further specifically assuming a filtration apparatus having a stainless steel filter. However, it should be understood that the apparatus according to this invention is not restricted to the filtration apparatus but is applicable to all of apparatus and apparatus elements used in sulfuric acid lines such as pipelines, containers, heat exchangers and pumps.

The stainless steel filter incorporated in the filtration apparatus is a filtration apparatus element formed of a stainless steel material. The stainless steel material constituting the filter can include those stainless steels such as types 316 - 316L and 304L. Among them, type 316L stainless steel is mainly used.

The fine shape of the filter may be any of a type in which the non-woven fabric of fine stainless steel fibers is sintered, a type in which those knitted into a metal net shape are sintered, and a type of sintered powder. For attaining the filtration at high accuracy, a type formed by sintering non-woven fabric is used preferably.

The entire shape of the stainless steel filter can include those in which filter elements are molded and fabricated into a leaf disk shape, molded and fabricated into a candle type (cylindrical form), molded and fabricated into pleats shape and molded and fabricated into a plate shape, with no particular restriction to them.

The filtration apparatus as an embodiment of this invention comprises the stainless steel filter described above and a vessel in which the filter is placed, and the shape of the container is appropriately selected in accordance with the shape of the filter.

As has been described above already, for obtaining a favorable corrosion suppressing effect in this embodiment, it is necessary that a noble metal is brought into contact with at least a portion of the apparatus, that is, the filtration apparatus, and then the noble metal and the stainless steel filter are electrically connected. There is no particular restriction on the method of contact and the noble metal is disposed on the inner surface of the filtration vessel or parts of the filtration apparatus, for example, by plating, cladding, vapor deposition, flame spray, sputtering or ion plating and the stainless steel filter is electrically connected therewith by way of a conductive member formed, for example, of a metal material. For example, the stainless steel filter and the inner surface of the filtration vessel or parts of the filtration apparatus provided with the noble metal can be connected by using, for example, gaskets, packings or bolts made of stainless steel.

In a case where the noble metal is in contact with the filtration apparatus by way of the connective member, it is preferred regarding the positional relation with the stainless steel filter that the surface of the stainless steel filter and the surface of the noble metal are made closer as much as possible. With a view point of suppressing corrosion, the distance between the surface of the noble metal and the surface of the filter is preferably 50 cm or less and, particularly preferably, 20 cm or less.

Further, for obtaining a favorable corrosion suppressing effect in this embodiment, it is desirable that the ratio of the surface area of the noble metal to the filtration area is 1/1000 - 1000/1. "Filtration area" means not a solution contact surface area of the stainless filter but a filtration surface area calculated based on the shape of the stainless filter (leaf disk, candle, plate or the like). Further, "surface area of noble metal" means an area in contact with the solution to be filtered. For the definition described above, when the ratio of the surface area of the noble metal relative to the filtration area is less than 1/1000, corrosion suppression is not sufficient and a solution of stable quality can not be obtained. On the other hand, when the ratio of the surface area of the noble metal to the filtration area is 1000/1 or more, provision of the noble metal to the apparatus is substantially impossible, which is not practical. In this embodiment, it is particularly preferred that the ratio of the surface area of the noble metal relative to the filtration area is from 1/20 to 20/1.

The filtration area is preferably set such that the initial pressure loss in the filter is 0.001 MPa or more, and 20 MPa or less while different depending on the application use of the filtration apparatus and the shape of the filter incorporated into the apparatus. The filtration area is desirably set such that the initial pressure loss is ranges from 0.01 MPa to 10 MPa and, more preferably, from 0.05 MPa to 5 MPa. "Initial pressure loss" means a pressure difference before filtration and after filtration in the initial state where filtration of the solution is started. When the initial pressure loss is large, the filtration accuracy tends to be worsened and the durability of the filter tends to be shortened. On the contrary, if the initial pressure loss is small, the size of the apparatus is increased, which is not practical.

The filtration apparatus described above is to be explained more specifically for the filtration apparatus used in subsequent examples with reference to the drawings as an example. The filtration accuracy and the specific surface area of the filter were measured by the methods as shown below.

Filtration accuracy

100 mg/L of water dispersed ISO medium dusts were filtered, particles before and after the filtration were measured by a particle counter, and the particle diameter providing a capturing efficiency of 99.5% is defined as a filtration accuracy.

Specific surface area of the filter

A gas adsorption area of the filter was determined by a BET method and the surface area relative to the filtration area was defined as a specific surface area (unit: $m^2/m^2$).

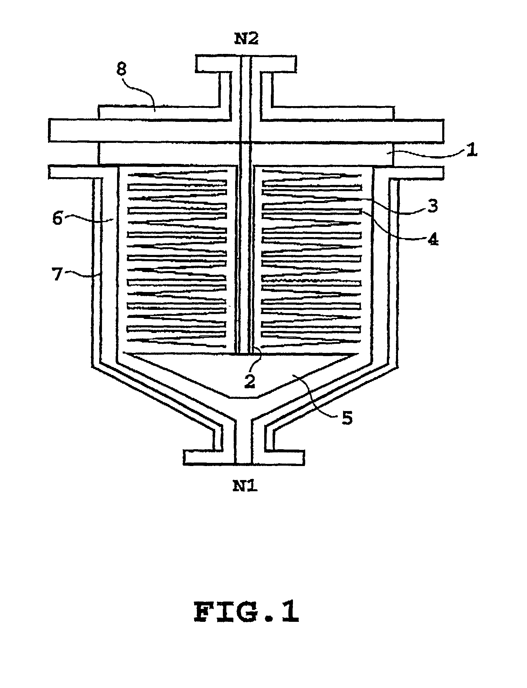

Fig. 1 is an embodiment according to this invention, which is a schematical cross sectional view illustrating a filtration apparatus using a leaf disk filter. In the drawing, are shown by reference numerals, a partition plate 1, a center pole 2, a leaf disk filter 3, a spacer 4, an end plate 5, a vessel 6, a jacket 7 for keeping the temperature of the vessel and a lid (with jacket) 8.

The leaf disk filter 3 is of a type formed by sintering a non-woven fabric made of type 316L stainless steel fibers of 7 inch outer diameter, and the filtration accuracy of the filter is 3 μm. The specific surface area to the filtration area of the leaf disk filter 3 is 150 $m^2/m^2$. Further, the leaf disk filters 3 has 178 mm outer diameter and 60 mm inner diameter. As can be seen from Fig. 1, since the leaf disk filters 3 are used by the number of eight, the filtration area thereof can be calculated as 3529 $cm^2$ by the following equation:

$$\{((\text{outer diameter} \div 2)^2 - (\text{inner diameter} \div 2)^2) \times \pi \times 2 \times 8\}.$$

The spacer 4 is a disk made of type 316 stainless steel having 7 inch outer diameter and 2 mm thickness and the surface layer is electrolytically plated uniformly with Au to a thickness of 2 to 3 μm. The noble metal is not disposed on the inner surface of the vessel 6. Between the leaf disk filter 3 and the spacer 4, rod-shaped distance bars each of φ 1 mm made of type 304 stainless steel (not illustrated) are disposed radially for ensuring the flow channel of the solution.

A solution to be filtered enters from N1 into the vessel, filtered through the leaf disk filters 3 and then discharged through the center pole 2 from N2. The leaf disk filters 3 and the spacers 4 applied with Au plating are sealed by a metal gasket (not illustrated) and electrically conducted. Further, the ratio of the surface area of noble metal (Au plated area) relative to the filtration area is about 7/8. The maximum distance between the surface of the leaf disk filter and the Au-plated surface is 10 mm.

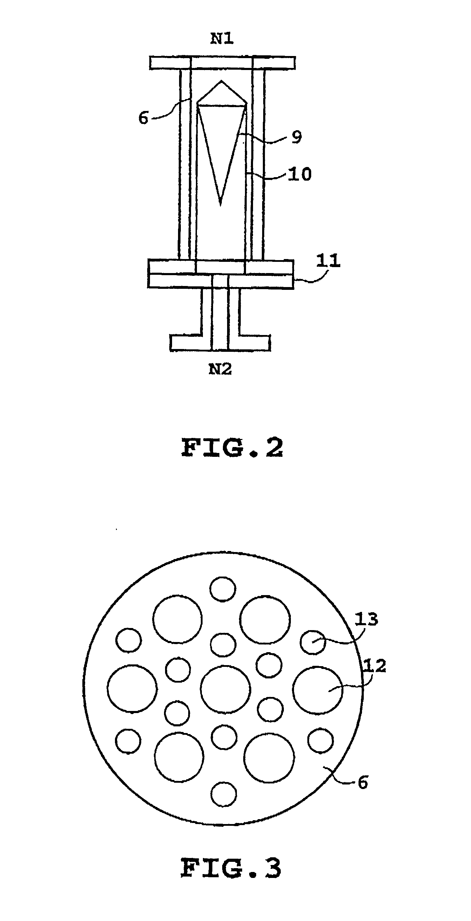

Fig. 2 shows a schematical cross sectional view illustrating a filtration apparatus using a candle type filter as an embodiment according to this invention. In the drawing, are shown by reference numerals, a vessel 6, a conical member 9, a candle type filter 10, and a flange 11 for setting the filter. N1 shows an inlet for the solution and N2 shows an exit for the filtered solution.

The conical member 9 is used for unifying the flow rate and disposed in the candle type filter 10. The conical member 9 is made of type 316 stainless steel.

The candle filter 10 is of a type formed by sintering a metal gauze made of type 304 stainless steel and has a filtration accuracy of 10 μm. The filter 10 has 35 mm outer diameter and 150 mm height. Accordingly, the filtration area thereof can be calculated as 165 $cm^2$ by the following equation:

$$\{\text{outer diameter} \times \pi \times \text{height}\}.$$

The inner surface area of the vessel 6 is electrolytically plated with Pt to a thickness of 1 to 2 μm. Since a metal packing is used for the flange 11, the vessel 6 and the candle type filter 10 are electrically conducted. The ratio of the Pt-plated surface area (surface area of noble metal) relative to the filtration area is about 5/1. The specific surface area to the filtration surface of the candle type filter 10 is 20 $m^2/m^2$. The maximum distance between the surface of the candle type filter and the Pt surface is 15 mm.

Fig 3 is a schematic cross sectional view illustrating a filtration apparatus using a plurality of cylindrical filters as an embodiment according to this invention. In the drawing, are shown by reference numerals, a vessel 6, a cylindrical filter 12 and a rod-like member 13. N1 shows an inlet for a solution and N2 shows an exit for a filtered solution.

The cylindrical filter 12 has 60 mm outer diameter and 500 mm length and is fabricated into a pleats shape. The filtration area of the cylindrical filter 12 is determined as an area of the pleats-like shape which is extended into a planar shape, which is 2.8 $m^2$ for seven filters. The rod-like member 13 is formed by vapor depositing Au to a thickness of 0.1 μm. on the surface of a rod made of type 304 stainless steel. The vessel 6 is formed of type 304 stainless steel and the noble metal is not disposed on the inner surface of the vessel 6.

The cylindrical filter 12 and the rod-like member 13 are sandwiched vertically by two partition plates. Accordingly, they are electrically conducted with each other by way of the partition plates. The specific surface area to the filtration area of the cylindrical filter 12 is about 20 $m^2/m^2$. Further, the ratio of the Au-vapor deposition area (noble metal surface area) of the rod-like member 13 relative to the filtration area of the cylindrical filter 12 is about 1/7.4. Further, the maximum distance between the Au-vapor deposited surface and the surface of the cylindrical filter 12 is 70 mm.

With the constitution of the apparatus according to this invention as described above, the corrosion resistance of the apparatus formed of the stainless steel or carbon steel exposed to the sulfuric acid environment can be improved remarkably. Particularly, in the filtration apparatus as an embodiment according to this invention, products caused by the corrosion of the stainless steel filter are extremely small and filtration products of good quality can be obtained.

The stainless steel filter provides an element which can substantially be used industrially in the filtration of highly viscosity fluids at high accuracy. However, since the stainless steel filter comprises fine wires and has a large surface area, effect of the sulfuric acid corrosion to the solution is remarkable. Accordingly, a significant effect can be obtained when this invention is applied to the stainless steel filter. That is, by the constitution of the filtration apparatus according to this invention, it is possible to stably filter corrosive fluids, particularly, a solution mainly comprising sulfuric acid (particularly) at a good quality.

Apparatus for processing solutions mainly comprising sulfuric acid are versatile such as sulfuric acid production facilities, sulfuric acid purification facilities, aramid fiber production facilities, aramid film production facilities and respective polymers recovery facilities. The apparatus is an equipment which is indispensable, particularly, for filtration at high accuracy in fiber or film production facilities. Accordingly, when the corrosion resistant apparatus according to this invention is applied to such facilities, the solutions can be processed at good quality and stably to attain improvement for the quality of products and improvement for the operation efficiency.

A third embodiment according to this invention concerns a method of producing heat resistant forming products. The method of producing heat resistant forming products according to this invention has a feature of filtering a heat resistant resin solution containing sulfuric acid as the starting material for the heat resistant forming products by using an apparatus at least having a filtration apparatus having corrosion resistance to sulfuric acid or sulfuric acid-containing solution, and forming and fabricating the obtained filtrates into a predetermined shape.

The method of producing the heat resistant forming products can be practiced suitably by using the corrosion resistant apparatus, particularly, the filtration apparatus made of the stainless steel or carbon steel described previously for the second embodiment according to this invention. That is, in the filtration apparatus, the noble metal has to be in contact with at least a portion on the inside surface of the filter apparatus exposed to the sulfuric acid-containing solution. When the noble metal is in contact with at least a portion on the inside surface of the filter apparatus and electrically conducted therewith, corrosion of the apparatus made of the stainless steel or carbon steel can be suppressed effectively. As a result, it is possible to improve the effect of corrosion for apparatus known so far and provide a heat resistant forming products of higher quality.

In a preferred embodiment according to this invention, the ratio of the surface area of the noble metal to the filtration area of the filter is preferably 1/1000 - 1000/1. Further, the filtration area of the filter is desirably set such that the initial pressure loss in the filter is 0.001 MPa or more and 20 MPa or less. It is desirable to set the filtration area such that the initial pressure loss is within a range preferably from 0.01 MPa to 10 MPa and, more preferably, from 0.05 MPa to 5 MPa.

The heat resistant forming products as an object of this invention mean forming products comprising heat resistant resin in a wide range recognized by those skilled in the art. As a preferred embodiment according to this invention, the corrosion resistant apparatus of this invention can be used for the production of polyamide or polyimide films or fibers in the sulfuric acid environment to attain the improvement in the quality of the products and improvement of the operation efficiency with no particular restriction. In the production method described above, remarkable effect can be obtained by corrosion suppression in a case where the heat resistant resin solution is a system that exposes to apparatus to a corrosive atmosphere, for example, a system of a heat resistant resin solution comprising sulfuric acid as a main ingredient (solution at a concentration of sulfuric acid of 50 wt% or more).

Heat resistant films comprising polyamide or polyimide are described, for example, in Japanese Patent Application Laid-Open No. 49-131247 (1974), Japanese Patent Application Laid-Open No. 51-81854 (1976), Japanese Patent Application Laid-Open No. 52-84245 (1977), Japanese Patent Application Laid-Open No. 52-85251 (1977), Japanese Patent Application Laid-Open No. 58-42649 (1983), Japanese Patent Application Laid-Open No. 59-45124 (1984), Japanese Patent Application Laid-Open No. 61-246918 (1986), Japanese Patent Application Laid-Open No. 62-70421 (1987), Japanese Patent Application Laid-Open No. 60-15436 (1985), Japanese Patent Application Laid-Open No. 60-15437 (1985). and Japanese Patent Application Laid-Open No. 62-488726 (1987). Also in the production of such heat resistant films, it is possible to provide films of more excellent quality by the application of the corrosion resistant apparatus according to this invention.

Now, as an embodiment for the method of producing the heat resistant forming products according to this invention, a method of producing a heat resistant film for use in a magnetic recording medium is to be described. When a heat resistant film is used as a base film for a magnetic recording medium, the surface of the film has to be smooth. Then, description is to be made for the method of producing a heat resistant film including a step of filtering a heat resistant resin by using a filtration apparatus having a stainless steel filter and a step of forming the obtained filtrates into a film shape. Usual stainless steel filters suffer from corrosion when exposed to the sulfuric acid environment and result in deterioration of the film quality by the corrosion. However, in the production method according to this invention, since the stainless steel filter and the noble metal are conducted electrically to show corrosion resistance to the sulfuric acid environment, stable filtration at high accuracy is possible. Filtration of the heat resistant resin can be attained favorably by using various kinds of filtration apparatus illustrated for the second embodiment according to this invention.

By the way, for the production of heat resistant films for use in magnetic recording media, techniques controlling the surface smoothness of the films have been disclosed, for example, in Japanese Patent Application Laid-Open No. 61-246919 (1986), Japanese Patent Application Laid-Open No. 63-297038 (1988), Japanese Patent Application Laid-Open No. 2-1741 (1990), Japanese Patent Application Laid-Open No. 2-133434 (1990), Japanese Patent Application Laid-Open No. 3-119512 (1991), Japanese Patent Application Laid-Open No. 3-114830 (1991), Japanese Patent Application Laid-Open No. 4-34716 (1992), Japanese Patent Application Laid-Open No. 4-149245 (1992), Japanese Patent Application Laid-Open No. 6-195679 (1994), and Japanese Patent Application Publication No. 5-64594 (1993). This invention may be combined properly with the methods described above as well.

As the heat resistant resin applied in this invention, those resins having heat resistance such as polyamide resin or polyimide resin are used. Particularly, those resins applied preferentially with the solution film forming method to the melting film forming solution are preferred.

The heat resistant resin solution used in this invention is a solution in which a heat resistant resin is dissolved into a solvent, which also includes a solution of a precursor for the heat resistant resin. For example, a polymer soluble to an organic solvent may be polymerized directly in a solvent and used as it is, without isolation of the resin, as a starting solution of the film, or an inorganic salt such as calcium chloride may be added and used as a solution aid. Further, a polymer may be isolated once and then formed into a solution, for example, by re-dissolution. Those less soluble to an organic solvent such as poly-para-phenylene terephthalamide (hereinafter referred to as PPTA) may be dissolved in a concentrated sulfuric acid to form a solution. This invention provides an effect, particularly, in a case where the heat resistant resin solution contains sulfuric acid to form a sulfuric acid system solution (system in which a stainless steel filter is exposed to corrosive atmosphere).

Further, for the polyimide resin, a tetracarboxylic acid anhydride and an aromatic diamine may be reacted in an organic solvent to form a polyamide acid, and the solution is used as it is or it may be once cyclized into a polyimide which is then dissolved again in a solvent to form a solution. The concentration of the resin in the solution is selected for proper condition for each of the resins. Generally, a concentration of 0.1 to 50% by weight, particularly, 1 to 30% by weight is often used.

In this invention, use of a solution in which a lubricant is dispersed in the resin solution is a particularly preferred embodiment of the invention for producing a base film for use in magnetic recording medium of high quality.

"Lubricant" is fine particles for forming fine projections on the surface of a film when the material is formed into the film. Presence of fine projections on the surface of the film can improve the slidability between each of the films to avoid blocking phenomenon or the like. The lubricant can include fine particles of organic compounds and inorganic compounds. For example, fine particles of polystyrene, silica, alumina, titanium oxide, calcium sulfate, calcium carbonate, zeolite, carbon black and other metals or metal compounds, or colloidal silica can be used.

Referring to the size of such fine particles, it is preferred that they are contained in the solution such that the average grain size in the obtained film is 500 nm or less and, particularly, 10 to 200 nm. For the amount of the lubricant, it is preferred to control the solution such that it is contained by 0.001 to 2% by weight, particularly, 0.01 to 1 % by weight in the film. The control can be conducted by controlling the concentration of the resin and the concentration of the lubricant in the solution.

When the lubricant is dispersed in the resin solution, direct addition of the lubricant solely into the resin solution should be avoided since no sufficient dispersion state can be attained. The lubricant is dispersed into the resin solution by previously being dispersed in a solvent used for the polymerization of the resin. As an alternative method, it is dispersed into a resin solution, for example, by a method of previously dispersing into a solvent used for the re-dissolution of the resin, or by a method of taking out a portion of the solvent, dispersing the lubricant therein and then admixing the same to a resin solution.

As the means for dispersing the lubricant, various kinds of homogenizers may be used and, particularly, a ultrasonic wave homogenizer is recommended since the dispersing force is excellent.

As a method of improving the dispersed state of the lubricant, lubricants mono-dispersed in a colloidal state are commercially available and use of them by dilution is preferred for attaining a dispersion state with an average aggregation degree of 10 or less, but a care should be taken since the lubricant tends to be aggregated depending on the solvent used or the dilution condition, which makes it difficult to obtain an aimed effect. Particularly, in a case of using an amide solvent dissolving an inorganic salt as a dissolution aid or concentrated sulfuric acid as a solvent, since the colloidal lubricant tends to be aggregated, it is important to take a consideration, for example, that the colloidal dispersion is once diluted with that for a solvent identical with the liquid dispersion and then it is mixed with a solvent for dissolving the resin under sufficient stirring.

In this invention, it is essential to filter the heat resistant resin solution by using a stainless steel filter in electric connection with the noble metal. This is because various kinds of impurities are present in the heat resistant resin solution and such impurities have to be filtered. Such impurities include impurities in solvent, impurities in heat resistant resins and impurities attributable to additives such as the lubricant and also include impurities which inevitably intrude, upon various operations, for example, resin charging operation and dissolving operation.

In the case of the lubricant, filtration is conducted also for removing aggregates of lubricants or lubricants of undesired particle size. By filtering to remove the impurities, pinholes or breakage of the film caused by coarse impurities, or coarse projections can be decreased. Further, in a case of using the lubricant, control for the surface shape of the film can be facilitated.

Then, due to the corrosion preventive effect by the noble metal, there is no leaching of corrosion products caused by corrosion of the stainless steel filter (metal ingredients such as iron, chromium and the nickel, reduction products of solvent, resin components or the like) to obtain films of stable quality.

There is particular restriction on the filtration accuracy and, in order to obtain a base film of high quality for use in a magnetic recording medium, a filter capable of capturing 99,5% or more of those with a particle size of 10 μm. preferably, 5 μm or more is used preferably. Accordingly, for the filtration accuracy, a filter of 5 μm or less is used preferably. With such filtration at high accuracy, films of high quality with less large projections and less pin holes can be obtained.

Upon filtration of a heat resistant resin solution, it is preferred to conduct filtration at a constant flow rate by using a gear pump of good constant volume performance so as to keep pressure fluctuation in the filter as low as possible. For the pressure fluctuation, it is preferred to use those ensuring the constant volume performance for the filtration flow rate such that fluctuation per 1 hour in the filter is within 10%, particularly, within 1% of the pressure loss. By lowering the pressure fluctuation, stable filtration for obstacles can be conducted to decrease large projections or pin holes in the film.

As has been explained above, deterioration of the quality caused by the corrosion of the apparatus can be improved remarkably by using the corrosion resistant apparatus to the production of the heat resistant forming products. The production method according to this invention is effective, particularly, in a case of producing heat resistant forming product with a heat resistant resin solution system in which the apparatus used in the production step is exposed to the corrosive atmosphere (for example, heat resistant resin solution system comprising sulfuric acid as the main ingredient).

Particularly, in the production of the heat resistant film accompanying filtration by using the stainless steel filter, leaching of metal ingredients from the stainless steel filter and leaching of corrosion products can be suppressed. As a result, heat resistant films of high quality excellent in the surface property of the film with less defects can be produced. Further, a heat resistant film of high quality with extremely less metal ingredient content can be produced. The heat resistant film of high quality as described above is useful as a base film for use in a magnetic recording medium, and the method according to this invention is useful for the industrial production of heat resistant films at high quality.

(Example)

This invention is to be described more specifically by way of examples but they do not restrict the invention and it will be apparent that various modifications are possible within a range not departing the scope of the invention.

The following examples illustrate the effect of corrosion suppression according to this invention.

(Example 1)

This example illustrates the effect of corrosion suppression for various kinds of stainless steels in a sulfuric acid solution at high concentration.

Each of test specimens shown in Table 1 was immersed in a environment of 98 wt% aqueous solution of sulfuric acid at 80°C, to conduct a corrosion test. As a test specimens in contact with gold, each of stainless steel test specimens gold plated at one side was used. In this case, the area ratio between gold and stainless steel was 1:1. Corrosion was evaluated by calculating the corrosion rate based on the change of the weight for the test specimens before and after immersion respectively. The results are shown in Table 1. From Table 1, it can be seen that the corrosion rate for stainless steel is suppressed to about 1/8 in any of the cases of type 304 steel and type 316 steel by making gold contact with stainless steel.

Table 1

| Corrosion rate for each of stainless steels (mm/year) | | | |
|---|---|---|---|
| | No contact | Contact with gold | Corrosion suppression rate |
| Type 304 stainless steel | 0.6 | 0.08 | 1/8 |
| Type 316 stainless steel | 0.4 | 0.05 | 1/8 |

(Example 2)

This example illustrates the corrosion suppression effect for carbon steel in a sulfuric acid solution at high concentration.

Each of test specimens shown in Table 2 was immersed, respectively, in an aqueous environment of 98 wt% solution of sulfuric acid at 40°C, to conduct a corrosion test. As test specimens in contact with gold, Each of carbon steel test specimens gold plated at one side was used. In this case, the area ratio between gold and stainless steel was 1:1. Corrosion was evaluated by calculating the corrosion rate based on the change of the weight for the test specimens before and after immersion respectively. The result is shown in Table 2. From Table 2, it can be seen that the corrosion rate for carbon steel is suppressed to about 2/3 by making gold contact with carbon steel.

Table 2

| Corrosion rate for carbon steel (mm/year) | | | |
|---|---|---|---|
| | No contact | Contact with gold | Corrosion suppression rate |
| Carbon steel | 0.3 | 0.2 | 2/3 |

(Example 3)

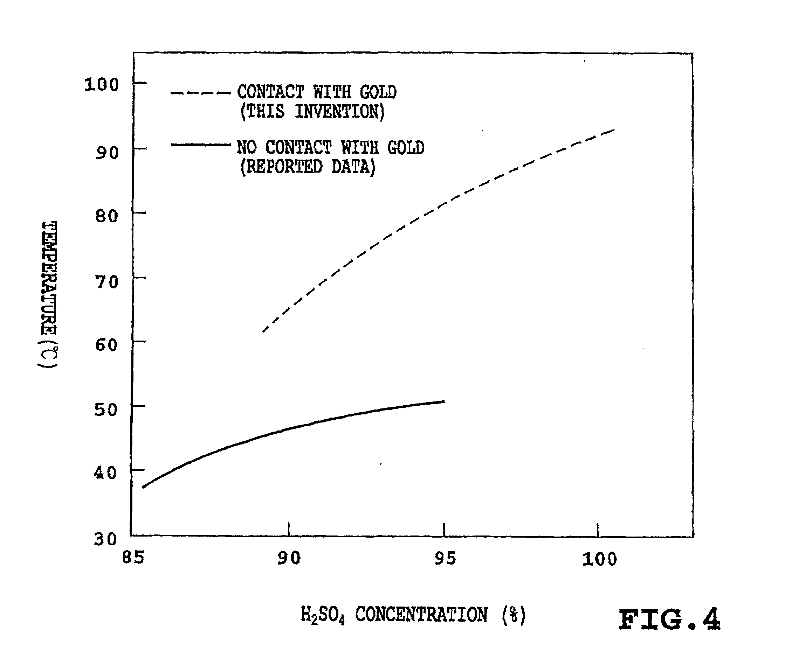

This example illustrates a range for the corrosion resistant conditions of stainless steel. Type 316 stainless steel test specimens gold plated on one side were put to a corrosion test at a sulfuric acid concentration of 90 wt% or higher and 100 wt% or lower and under the temperature condition of 50°C or higher and 100°C or lower. In this case, the surface area ratio between stainless steel and gold was 1:1. In the corrosion test, the test specimens described above were immersed in an aqueous solutions of sulfuric acid at various temperatures and concentrations and kept for about 100 hours, and then the change of the weight of the test specimens was measured. The result was converted to the corrosion rate (mm/year) and the range for the condition of 0.1 mm/year or less is shown by a dotted line in Fig. 4. In the graph, reported corrosion limit of type 316 stainless steel (corrosion rate of 0.1 mm/year or less) was also shown as a reference by a solid line. As can be seen from Fig. 4, it has been found that the range for the corrosion resistant condition is extended to a range of high temperature and high concentration sulfuric acids by bringing gold into contact with the stainless steel.

(Example 4)

This example illustrates the corrosion suppression effect for stainless steel in a sulfuric acid solution at high concentration containing a polymer.

A concentrated sulfuric acid solution at 99.8 wt% in which silica was dispersed was prepared to which PPTA (poly-p-phenylene terephthalamide) was dissolved to a polymer concentration of 11 wt%, to obtain a sulfuric acid solution of the polymer (the sulfuric acid solution of the polymer is hereinafter referred to as a dope). When the type 316 stainless steel was immersed in the dope at 60°C for 2 days, general corrosion with an oscillation phenomenon for the natural immersion potential occurred.

Then, a platinum wire was brought into contact with a sintered filter made of type 316 in the identical environment.

While the filter had an outer profile dimension of 20 mm square, since the specific surface area of the filter was 150 $m^2/m^2$, the actual surface area of the stainless steel was 60,000 $mm^2$. Further, the specific surface area of the filter was determined according to the BET method based on the gas adsorption area of the filter and the surface area to the filtration area was defined as a specific surface area ($m^2/m^2$). Further, the filtration area is not a solution contact surface area of the stainless steel filter but a filtration area calculated based on the shape of the stainless steel filter (for example, leaf disk, candle and plate-like shape).

The diameter of the platinum wire in contact with the filter was 0.8 mm and the length thereof in contact with the stainless steel filter and immersed in the dope was 80 mm. Accordingly, the contact surface area of the platinum wire was 126 $mm^2$. Accordingly, the surface area ratio between the stainless steel and the platinum was about 480:1. While they were immersed in the dope for 2 days under the condition where both of them were in contact, oscillations of the natural immersion potential did not occur and no distinct corrosion was observed for the stainless steel filter. Thus, it has been found that when the stainless steel is in contact with the noble metal at a area ratio of about 500:1, the potential is stabilized and the corrosion suppression effect can be obtained.

The following examples illustrate the corrosion resistance of the apparatus according to this invention. For evaluation of the corrosion resistance of the apparatus, leached elements contained in filtrates were analyzed. The elemental analysis for the filtrates was conducted as described below.

Elemental analysis for solution

10 g of a solution was weighed precisely and ashfied at a temperature of 600°C or higher. Then, it was dissolved into an acid and the metal ingredients were analyzed at an accuracy of 1 ppb according to ICP-MASS.

(Example 5)

In this example, a filtration apparatus using a cylindrical filter made of stainless steel shown in Fig. 3 was used.

After diluting a liquid dispersion of colloidal silica containing 40 wt% of spherical silica with an average particle size of 80 nm in water to 7 wt% concentration with distilled water, it was added to 101.5% sulfuric acid while stirring and cooling to obtain a solution of concentrated sulfuric acid at a sulfuric acid concentration of 99.8%. The solution of the concentrated sulfuric acid was filtered through circulation repetitively by the filtration apparatus shown in Fig. 3. The circulation amount was controlled such that the filter initial pressure loss was 0.02 MPa. Sulfuric acid during circulation was sampled occasionally to conduct elemental analysis (ICP-MASS). The results are summarized in Table 3. In Table 3, the amount of Fe which was the greatest in the amount as the leaching ingredient was described.

(Comparative Example 1)

In this example, a filtration apparatus in which a noble metal was not electrically conducted was used for comparison with Example 5.

A solution of concentrated sulfuric acid at 99.8% in which silica was dispersed in the same manner as in Example 5 was prepared. The filtration apparatus was constituted in the same manner as the filtration apparatus used in Example 5 except for using the apparatus shown in Fig. 3 in which Au was not vapor deposited on the rod-like member 13. By using the filtration apparatus described above, circulatory filtration for the concentrated sulfuric acid and elemental analysis were conducted in the same manner as in Example 5. The results are summarized in Table 3. In Table 3, the amount of Fe which was the greatest in the amount as the leaching ingredient was described. Although not described in Table 3, the amount of Cr and Ni was also changed under the similar trend.

Table 3

| Result of elemental analysis in Example 5 and Comparative Example 1 | | | | | |
|---|---|---|---|---|---|
| Number of day for circulation | Before filtration | 1 day | 3 day | 5 day | 7 day |
| Example 5 | | | | | |
|    Amount of Fe (ppb) | 100 | 120 | 180 | 230 | 250 |
|    Increment of Fe (PPb) | | 20 | 60 | 50 | 20 |
| Comparative Example 1 | | | | | |
|    Amount of Fe (ppb) | 95 | 120 | 8000 | 10000 | 11000 |

Table 3   (continued)

| Result of elemental analysis in Example 5 and Comparative Example 1 | | | | | |
|---|---|---|---|---|---|
| Number of day for circulation | Before filtration | 1 day | 3 day | 5 day | 7 day |
| Comparative Example 1 | | | | | |
| Increment of Fe (PPb) | | 25 | 7880 | 2000 | 1000 |

As apparent from Comparative Example 1, in the filtration apparatus using the stainless steel filter in which the noble metal was not in contact therewith, the amount of Fe in the sulfuric acid solution was not stabilized. On the other hand, in the filtration apparatus in which Au was in contact therewith as in Example 5, a filtered solution of stable quality could be obtained.

(Example 6)

In this example, a filtration apparatus using a leaf disk filter made of stainless steel shown in Fig. 1 was used.
A solution of 99.8% concentrated sulfuric acid in which silica was dispersed in the same manner as in Example 5 was prepared. PPTA (poly-p-phenylene terephthalamide) was dissolved in the obtained solution of the concentrated sulfuric acid such that the polymer concentration was 11% to obtain a sulfuric acid solution of the polymer (hereinafter, the sulfuric acid solution of the polymer is referred to as a dope). Then, by using the filtration apparatus shown in Fig. 1, the dope was filtered while controlling the filtration flow rate such that the initial pressure loss was 0.8 MPa. Elemental analysis for the dope after filtration was conducted (ICP-MASS) and the results are summarized in Table 4. In Table 4, the amount of Fe which was the greatest in the amount as the leaching ingredient was described.

(Comparative Example 2)

In this example, a filtration apparatus in which the noble metal was not electrically conducted was used as a comparison with Example 6.
A dope was obtained in the same manner as in Example 6. The filtration apparatus was constituted in the same manner as the filtration apparatus used in Example 6 excepting that Au-plating was not applied to the spacer 4 in the filtration apparatus shown in Fig. 1. Using the filtration apparatus described above, the dope was filtered and elemental analysis was conducted in the same manner as in Example 6. The results are summarized in Table 4. In Table 4, the amount of Fe which was the greatest in the amount as the leached ingredient was described. Although not described in Table 4, the amount of Cr and Ni was also changed under the similar trend. Further, the pressure fluctuation at about 0.2 MPa was caused frequently for about 2 weeks from the start of filtration.

Table 4

| Result of elemental analysis in Example 6 and Comparative Example 2 | | | | | | |
|---|---|---|---|---|---|---|
| Number of day for liquid passage after starting use of filter | 1 day | 3 day | 5 day | 10 day | 15 day | 20 day |
| Example 6 Amount of Fe (ppb) | 180 | 200 | 190 | 230 | 180 | 180 |
| Comparative Example 2 Amount of Fe (ppb) | 200 | 50000 | 60000 | 30000 | 25000 | 23000 |

As apparent also from Table 4, stainless steel ingredients were leached in a great amount in Comparative Example 2. On the other hand, in a case of using the filtration apparatus in which an Au-plated spacer was in contact therewith, a filtration solution of stable quality could be obtained.

(Example 7)

In this example, the filtration apparatus using the leaf disk filter made of stainless steel shown in Fig. 1 was used while modifying a portion thereof.
In Example 6, a filtration apparatus in which the Au-plated spacers and the stainless filters were arranged alternately was used (refer to Fig. 1). In this example, however, a filtration apparatus in which Au-plated spacers were disposed by the number of three relative to the stainless steel filters by the number of eight was used. The dope was filtered in the same manner as in Example 6 except for modifying the portion of the apparatus used in Example 6. The area of the Au-plated spacer relative to the filtration area of the filter, that is, the ratio of the surface area of the noble metal relative to the filtration area is about 3/8. The maximum distance between the Au-plated surface and the filter surface was about 20 mm. The results of elemental analysis for the filtered solution in this example was summarized in Table 5.

(Example 8)

In this example, a filtration apparatus using the leaf disk filter made of stainless steel shown in Fig. 1 was used with a portion thereof being modified.
In Example 6, the filtration apparatus having the Au-plated spacers was used (refer to Fig. 1), but the filtration apparatus Au-electroplated on the inner surface of the vessel 6 was used in this example. Thus, the dope was filtered in the same manner as in Example 6 except for modifying a portion of the apparatus used in Example 6. The Au-plated surface on the inner surface of the vessel, that is, the surface area of the noble metal is about 1/3 as the ratio to the filtration area of the filter. The maximum distance between the Au plated surface and the filter surface is about 60 mm. The results of elemental analysis for the filtration solution in this example are summarized in Table 5.

Table 5

| Result of elemental analysis in Examples 7 and 8 | | | | | | |
|---|---|---|---|---|---|---|
| Number of day for liquid passage after starting the use of filter | 1 day | 3 day | 5 day | 10 day | 15 day | 20 day |
| Example 7 Amount of Fe (ppb) | 180 | 200 | 250 | 280 | 270 | 280 |
| Example 8 Amount of Fe (ppb) | 210 | 510 | 640 | 630 | 650 | 640 |

The following examples illustrate production of heat resistant films using the production method for heat resistant forming product according to this invention. The characteristics of the manufactured films were measured as described below.

Elemental analysis for film

5 g of a film was weighed accurately and ashfied at a temperature of 600°C or higher. Then, it was dissolved into an acid and metal ingredients were analyzed at an accuracy of 1 ppb in accordance with ICP-MASS.

Film thickness

For the film thickness, 10 points were measured at random by using a measuring device of 2 mm diameter by a digital electronic micrometer (model K351C type, manufactured by Anritsu Co.) and the thickness is represented by the average values thereof.

Pinhole

Pinhole inspection was conducted, under continuous running, by a current conduction detection type pin hole tester in which a brush type electrode planted with carbon fibers and in contact at the tips thereof with a film surface is disposed on the upper surface of a film over the substantially entire width of the film, and a metal roll type electrode which rotates at a same linear speed as the film in contact with the lower surface of the film is opposed thereto (PFVI-1AVR type machine, manufactured by Kasuga Denki Co.). The inspection voltage was made constant at 400 V.

Large projection

The surface of the film was inspected under a view field of 100 cm$^2$ and the height of large projections was measured by a multiple interference method. The inspection was conducted five times for an identical sample and the average number thereof was defined as a number per 100 cm$^2$.

(Example 9)

This example concerns production of a heat resistant film by using the filtration apparatus shown in Fig. 1.

Liquid dispersion of colloidal silica containing 40% of spherical silica with an average particle size of about 80 nm in water was diluted with distilled water to 5% concentration. The diluted liquid dispersion was added under stirring to 101% sulfuric acid previously filtered and purified with a teflon filter (filtration accuracy: 0.1 μm). The obtained solution was filtered by a filter made of teflon at 1 μm cut, to form a concentrated sulfuric acid solution at a silica concentration of 0.035%. PPTA (poly-p-phenylene terephthalamide) was dissolved by using the obtained liquid dispersion of concentrated sulfuric acid to a polymer concentration of 11.5%, to prepare a solution of PPTA resin (hereinafter, the resin solution is referred to as a dope). It has been found that the dope is in a liquid crystalline state, for example, causing irregular reflection for light upon stirring and showing optical anisotropy of rendering the dark view field to bright view field in the Cross Nicol of polarization microscope under the optical microscopic observation.

The prepared dope was kept at a constant temperature of 65°C and filtered by using the filtration apparatus shown in Fig. 1, by using a gear pump of high constant volume performance. In this case, the initial pressure loss was 1.1 MPa. Further, the pressure fluctuation was 0.5% or less per 1 hour. The filtered dope was cast from a die onto an endless belt made of tantalum polished to a mirror face, at a draft ratio of 1.5 under an atmosphere at class 10 to 100. Then, air at class 100 or less with a dew point of 10°C was heated and blown to the cast dope onto the belt so that the dope was subjected to phase transformation from a the liquid crystalline phase to an anisotropic phase, and then it was coagulated in 30% sulfuric acid at 5°C to form a swollen film.

Then, after neutralizing and water washing the swollen film and then stretching longitudinally at 1.2 times, the film was applied with stretching in the transverse direction by 1.2 times while gripping both edges of the film with a grip and then applied with a hot blow drying and a heat treatment at 420°C while keeping a constant length state by gripping the edges as they are. Then, the portions held by the grip were slit and removed to adjust the width to 620 mm.

Then, after conducting pinhole inspection under continuous running, by a current conduction detection type pin hole tester in which a brush type electrode planted with carbon fibers and in contact at the tips thereof with a film surface is disposed on the upper surface of a film over the substantially entire width of the film, and a metal roll type electrode which rotates at a same linear speed as the film in contact with the lower surface of the film is opposed thereto (PFVI-1AVR type machine, manufactured by Kasuga Denki Co.), the film was taken up on every 10,000 m.

The obtained PPTA film had a thickness of 4.1 μm, which was sampled periodically to conduct inspection for the surface property and elemental analysis for the film. The results are summarized in Table 6. Since the ingredients detected mainly in the elemental analysis for the film were stainless steel ingredients, iron, chromium and nickel in total are shown as representative values in Table 6.

(Comparative Example 3)

In this example, similar heat resistant films were produced by using the apparatus constituted in the same manner as the filtration apparatus used in Example 9 except for not using the spacer 4 for comparison with Example 9.

Results of various tests on the heat resistant films are summarized in Table 6. Although not described in Table 6, the pressure difference in the filter tended to increase stepwise from 3rd day to 10th day after film formation.

When the films at 3rd day and 7th day in which many large projections were formed were analyzed by SEM-EDX, it was found that particulate S elements were present where the large projections were formed, which were attributable to the aggregation of silica. It is considered that S-element induced large projections were formed by the reduction of sulfuric acid upon corrosion of the stainless steel filter. Further, it is considered that the aggregation of silica was caused by the peeling of the surface layer due to the corrosion of the stainless steel filter.

In the same manner, when many pinholes formed at the 3rd day and the 7th day were analyzed, iron, chromium, nickel, molybdenum, etc. considered to be stainless steel ingredients were detected at the pinhole portions. This suggests that the formation of pinholes is caused by the corrosion of the stainless steel filter.

(Example 10)

This example relates to the production of heat resistant films by using the filtration apparatus formed by modifying a portion of the filtration apparatus used in Example 9.

In the filtration apparatus used in Example 9, Au-plated spacers and the stainless steel filters were arranged alternately (refer to Fig. 1), whereas Au-plated spacers by the number of three were arranged to the stainless steel filters by the number of eight in this embodiment. Same heat resistant films as those in Example 9 were produced by using the filtration apparatus constituted in the same manner as the apparatus used in Example 9 excepting for the modification described above. The area of the Au-plated spacer relative to the filtration surface of the filter, that is, the ratio of the surface area of the noble metal relative to the filtration area is about 3/8. The maximum distance between the Au-plated surface and the filter surface is about 20 mm. Results of various tests on the heat resistant films produced according to this example are summarized in Table 6.

(Example 11)

This example relates to the production of heat resistant films by using the filtration apparatus formed by modifying a portion of the filtration apparatus used in Example 9.

In the filtration apparatus used in Example 9, the Au-plated spacers were used (refer to Fig. 1), whereas Au-plated spacers were not used but the inner surface of the vessel 6 was electrolytically plated with Au in this example. Filtration of the dope and, subsequently, forming of the films were conducted in the same manner as in Example 9 by using the filtration apparatus constituted in the same manner as in Example 9 excepting for the modification as described above. In this case, the Au-plated area on the inner surface of the vessel relative to the filtration area of the filter, that is, the ratio of the surface area of the noble metal to the filtration area is about 1/3. Further, the maximum distance between the Au-plated surface and the filter surface is about 60 mm. Results of various tests on the heat resistant films produced according to this example are summarized in Table 6.

Table 6

| Results of various test on film | | | | | | | | | |
|---|---|---|---|---|---|---|---|---|---|
| Days after film formation (day) | | 1 | 3 | 5 | 7 | 10 | 15 | 20 |
| Example 9 | Pinhole (N/1000 m$^2$) | 8 | 6 | 1 | 1.5 | 1 | 0.6 | 0.7 |
| | Large projection (projection of 270 nm or more) (N/100 cm$^2$) | 4 | 3 | 5 | 5 | 4 | 4 | 4 |
| | Film element analysis (ppb) | 250 | 300 | 280 | 290 | 280 | 280 | 270 |
| Comp. Example 3 | Pinhole (N/1000m$^2$) | 10 | 300 | 280 | 500 | 100 | 20 | 15 |
| | Large projection (projection of 270 nm or more) (N/100 cm$^2$) | 4 | 250 | 150 | 200 | 180 | 80 | 50 |
| | Film element analysis (ppb) | 3000 | 8000 | 7500 | 11000 | 5000 | 3500 | 3300 |
| Example 10 | Pinhole (N/1000 m$^2$) | 9 | 7 | 6 | 6 | 8 | 7 | 7 |
| | Large projection (projection of 270 nm or more) (N/100 cm$^2$) | 3 | 11 | 19 | 16 | 12 | 14 | 12 |
| | Film element analysis (ppb) | 300 | 3500 | 380 | 410 | 360 | 360 | 390 |
| Example 11 | Pinhole (N/1000 m$^2$) | 10 | 20 | 15 | 7 | 5 | 8 | 9 |
| | Large projection (Projection of 270 nm or more) (N/100 cm$^2$) | 3 | 29 | 30 | 22 | 25 | 21 | 23 |
| | Film element analysis (ppb) | 500 | 700 | 600 | 550 | 480 | 500 | 520 |

In each of the examples, about 80% or more of large projections were projections of 270 nm - 540 nm, and projections of 810 nm or higher were scarcely present. Accordingly, Table 6 describes the total for the projections of 270 nm or higher. In Comparative Example 3, many projections of 810 nm or higher were observed, particularly, at and after the 3rd day, but for comparison with the examples, results of similar evaluation were described.

As apparent from Comparative Example 3 in Table 6, a great amount of metal ingredients are leached from the filter in a case of the stainless steel filter not electrically conducted with the noble metal. Further, it has been found that the quality of the film is also poor due to the corrosion behavior and since the term is long as well, it is not industrially satisfactory. On the other hand, in Example 9 to Example 11 using the filtration apparatus electrically conducted with the noble metal, the quality, that is, the surface property, defects and the metal ingredient content of the film were excellent and they were industrially practical.

Industrial Applicability

As has been described above, the corrosion suppressing method according to this invention can suppress corrosion of stainless steels or carbon steels exposed to sulfuric acid environments easily and effectively. Further, when the corrosion suppressing method according to this invention is applied to the apparatus used generally in the field of the sulfuric acid production industry or chemical industry using sulfuric acid, not only the durability of the apparatus is improved but also deterioration of the quality of the products caused by the corrosion of the apparatus can be improved remarkably. For example, films of high quality can be produced at a high yield by using filtration apparatus having corrosion resistance to the production of heat resistant films.

**Claims**

1. A method of suppressing corrosion of stainless steels or carbon steels exposed to the environments of sulfuric acid or sulfuric acid-containing solution, wherein
   the stainless steel or carbon steel, and a noble metal are brought into contact with each other.

2. A corrosion suppression method according to claim 1, wherein the surface area of the noble metal to the stainless steel or the carbon steel is 1/10000 or more.

3. A corrosion suppression method according to claim 1 or 2, wherein the concentration of sulfuric acid in the sulfuric acid-containing solution is 70% by weight or more.

4. A corrosion suppression method according to any one of claims 1 to 3, wherein the noble metal is a metal selected from the group consisting of platinum, gold, silver and palladium or an alloy thereof.

5. An apparatus made of stainless steels or carbon steels exposed to environments of sulfuric acid or sulfuric acid-containing solution, wherein
   a noble metal is in contact with at least a portion inside the apparatus made of stainless steels or carbon steels.

6. An apparatus according to claim 5, wherein the noble metal is a metal selected from the group consisting of platinum, gold, silver and palladium or an alloy thereof.

7. An apparatus according to claim 5 or 6, wherein the apparatus made of the stainless steels or carbon steels includes apparatus or apparatus elements selected at least by one from the group consisting of reactors, columns, vessels, pipelines, heat exchangers, filtration apparatus, pumps, valves and measuring instrument equipments.

8. An apparatus according to claim 7, wherein the apparatus made of the stainless steels or carbon steels is an apparatus at least having a filtration apparatus, and the filtration apparatus has a filter with a ratio of the surface area of the noble metal to the filtration area of 1/1000 to 1000/1.

9. A method of producing a heat resistant forming product from a resin solution containing sulfuric acid in which the resin solution containing sulfuric acid is filtered by using the apparatus according to claim 8 and the obtained filtrate is formed into a forming product.

10. A method according to claim 9, wherein the forming product is a fiber or a film.

11. A method according to claim 9 or 10, wherein the resin solution containing sulfuric acid contains a polyamide or a polyimide.

FIG.1

N1

FIG.2

FIG.3

FIG.4

## INTERNATIONAL SEARCH REPORT

International application No.

PCT/JP01/01523

A. CLASSIFICATION OF SUBJECT MATTER
Int.Cl$^7$ C23F 13/00, 15/00

According to International Patent Classification (IPC) or to both national classification and IPC

B. FIELDS SEARCHED

Minimum documentation searched (classification system followed by classification symbols)
Int.Cl$^7$ C23F 13/00, 15/00

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| Y | JP, 62-4889, A (Mitsubishi Heavy Industries, Ltd.), 10 January, 1987 (10.01.87), Claims; Fig. 2 (Family: none) | 1-11 |
| Y | US, 4145393, A (Helmold von Plessen et al), 20 March, 1979 (20.03.79), Claims & JP, 53-5043, A & GB, 1564774, A & DE, 2627536, A | 1-11 |
| Y | JP, 60-238492, A (Sumitomo Metal Industries, Ltd.), 27 November, 1985 (27.11.85), Claims (Family: none) | 1-11 |
| Y | JP, 4-202679, A (Hitachi, Ltd.), 23 July, 1992 (23.07.92), Claims (Family: none) | 1-11 |
| Y | US, 5130080, A (General Electric Company), 14 July, 1992 (14.07.92), Claims & JP, 4-223300, A & EP, 450440, A | 1-11 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>06 June, 2001 (06.06.01) | Date of mailing of the international search report<br>19 June, 2001 (19.06.01) |
| Name and mailing address of the ISA/<br> Japanese Patent Office | Authorized officer |
| Facsimile No. | Telephone No. |

Form PCT/ISA/210 (second sheet) (July 1992)

**INTERNATIONAL SEARCH REPORT**

International application No.

PCT/JP01/01523

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP, 9-169859, A (Toray Industries, Inc.),<br>30 June, 1997 (30.06.97),<br>Claim 8; Column 7, Par. No. 0031 (Family: none) | 8-11 |

Form PCT/ISA/210 (continuation of second sheet) (July 1992)